# EUROPEAN PATENT SPECIFICATION

(11) **EP 3 747 276 B1**
(45) Date of publication and mention of the grant of the patent: **06.11.2024**
(21) Application number: 19178099.8
(22) Date of filing: 04.06.2019
(51) Int. Cl.: A23G 1/00, A23G 9/04, A23G 9/40, A23G 9/42

(54) **COCOA-BASED FROZEN DESSERTS AND METHODS OF THEIR MANUFACTURE**
KAKAOBASIERTE GEFRORENE SÜSSSPEISEN UND VERFAHREN ZU DEREN HERSTELLUNG
DESSERTS CONGELÉS À BASE DE CACAO ET LEURS PROCÉDÉS DE FABRICATION

(43) Date of publication of application: 09.12.2020
(73) Proprietor: ODC Lizenz AG, 8807 Freienbach (CH)
(72) Inventor: Hühn, Tilo, 8824 Schönenberg (CH)
(74) Representative: Grünecker Patent- und Rechtsanwälte PartG mbB

(56) References cited:
- EP-A1- 3 114 939
- EP-A1- 3 114 942
- WO-A1-2013/092510
- US-A- 4 497 841
- PRINDIVILLE E A ET AL: "Effect of Milk Fat on the Sensory Properties of Chocolate Ice Cream", JOURNAL OF DAIRY SCIENCE, AMERICAN DAIRY SCIENCE ASSOCIATION, US, vol. 82, no. 7, 1 July 1999 (1999-07-01), pages 1425 - 1432, XP026993626, ISSN: 0022-0302, [retrieved on 19990701]
- PRINDIVILLE E A ET AL: "Effect of Milk Fat, Cocoa Butter, and Whey Protein Fat Replacers on the Sensory Properties of Lowfat and Nonfat Chocolate Ice Cream", JOURNAL OF DAIRY SCIENCE, AMERICAN DAIRY SCIENCE ASSOCIATION, US, vol. 83, no. 10, 1 October 2000 (2000-10-01), pages 2216 - 2223, XP026993533, ISSN: 0022-0302, [retrieved on 20001001]

## Description

### FIELD OF INVENTION

This invention relates to improved methods of manufacturing cocoa-flavored frozen desserts. In addition, the invention relates to cocoa-flavored frozen desserts obtained by the aforementioned method, including ice creams, sherbets, sorbets and frozen yoghurt products, for example. In certain embodiments, this invention relates to the use of a wet solid phase prepared from cocoa beans or nibs for the manufacture of cocoa-flavored frozen desserts.

### BACKGROUND OF THE INVENTION

In the last decades, cocoa (*Theobroma* cacao L.) has gained increased attention as a valuable source of healthy ingredients, including minerals, vitamins, polyphenols (especially catechins, anthocyanidins and proanthocyanidins), and antioxidants such as flavonoids, which are physiologically active in the reduction of oxidative stress, inhibition of low-density lipoproteins (LDL) oxidation and platelet aggregation, and are acting as vasodilators in blood vessels, for example (see WO 97/36497).

Therefore, efforts have been made to further explore the variety of cocoa-based foodstuffs, especially cocoa beverages and chocolate products, while ideally preserving the content of nutritionally beneficial ingredients present in the cocoa beans. Surprisingly, the preparation of cocoa-flavored frozen desserts with improved retention of mineral, vitamin and polyphenol contents has not received much attention, although to this date, chocolate ice cream remains one of the most popular ice cream flavors.

Conventionally, cocoa products used for flavoring ice cream are selected from natural or alkalized cocoa powder, cocoa liquor, chocolate syrup, or blends thereof. Said components are typically obtained by cocoa bean processing method including the harvest, fermenting and drying of the cocoa beans. Afterwards, the beans are usually cleaned, roasted and optionally broken into nibs. Once prepared for further processing, the cocoa beans or nibs are optionally treated with an alkaline solution to achieve a milder taste and darker colour, and then turned into cocoa mass by grinding, normally in multiple steps. High mechanical loads or shear stresses and/or high heat employed during the grinding step promote liquefaction of cocoa fats and the formation of chocolate liquor. The chocolate liquor is then subjected to a pressing step (e.g., filtration under the effect of high pressure) for producing cocoa butter and cocoa powder. Thereafter, cocoa powder may be further processed to chocolate syrup by addition of sweetener and water and subsequent heating. The thus obtained cocoa powder, cocoa liquor and/or chocolate syrup are added to a composition comprising milk fat, milk solids-not-fat (MSNF), sweeteners, stabilizers, emulsifiers and water to form an ice cream mixture, which may be then subjected to pasteurization, homogenisation, aging and freezing to obtain chocolate ice cream. Examples of such processing methods are disclosed in E.A. Prindiville, Journal of Dairy Science 1999, 82(7), 1425-1432; E.A. Prindiville, Journal of Dairy Science 2000, 83(10), 2216-2223; US 4 497 841 A, and WO 2013/092510 A1.

The ice cream manufacturing process described above has several disadvantages. Specifically, the high mechanical loads, shear stresses and/or high heat employed during dry grinding of cocoa beans or nibs promote decomposition of polyphenols, which are particularly sensitive to heat (see e.g. J. Alean et al., Journal of Food Engineering 2016, 189, 99-105). In addition, the alkalization of the cocoa beans/nibs likewise effects a decrease in polyphenol and flavanol contents (see K. B. Miller at al., J. Agric. Food Chem. 2008, 56, 8527-8533). Furthermore, since cocoa powder is a more concentrated source of chocolate flavor than chocolate liquor or cocoa butter, it is usually preferred for ice cream flavoring, while the fat content is primarily adjusted to enhance the mouthfeel and the perception of richness in the resulting ice cream. Therefore, it would be desirable to achieve effective separation of the oil-fat fractions to enable fine-tuning of the fat content via the oil-fat phase and high yields of valuable cocoa butter, which may be then used for other applications (e.g. cosmetics, health products or the like). However, in the conventional process described above, oil-fat fractions present in the cocoa beans are emulsified during the grinding step, so that separation of the oil-fat phase becomes difficult or even impossible after emulsification without the use of undesirable organic solvents, and obtaining or retaining desirable flavors and/or cocoa products such as aromatics, anti-oxidants, and/or vitamins becomes difficult or inefficient.

In the recent years, alternative cocoa bean processing methods have been developed which exert lower thermal burden on the cocoa mass compared to conventional methods and hence preserve higher contents of polyphenols, antioxidants and/or vitamins. For example, WO 2010/073117, EP 3 114 940 B1, EP 3 114 941 B1, EP 3 114 942 B1 and EP 3 114 939 B1 disclose methods for processing cocoa beans comprising the formation of a suspension comprising cocoa beans or nibs and water, wet grinding the suspended beans or nibs, heating the suspension, and decanting the same such that said suspension is separated into a water phase, a fat phase and a solid phase, in order to avoid liquefaction of the cocoa fat and formation of a chocolate liqueur during mechanical processing. The aforementioned methods are directed to the provision of chocolate, chocolate-like products and chocolate construction kits, which may be used for the preparation of fillings and coatings for ice creams. However, when using said chocolate constructions kits as flavor sources for frozen desserts, the yield of preserved anti-oxidants and pleasant aromas (e.g. fruity, flowery, coconut-like) in the final product still leaves room for improvement. In addition, it would be desirable to simplify and accelerate the manufacturing process of cocoa-flavored frozen desserts as an economically advantageous process complementing cocoa butter extraction and making optimal use of the valuable components of the cocoa beans.

### SUMMARY OF THE INVENTION

The present invention solves these objects with the subject matter of the claims as defined herein. The advantages of the present invention will be further explained in detail in the section below and further advantages will become apparent to the skilled artisan upon consideration of the invention disclosure.

Generally speaking, in one aspect the present invention provides a method of manufacturing a cocoa-flavored frozen dessert, comprising the steps of: a) adding water to cocoa beans or nibs to form a suspension; b) wet grinding said suspension; c) subjecting said suspension to a heat treatment at a temperature of 70°C or less; d) separating the suspension into a water phase (heavy phase), a fat phase (light phase) and a solid phase, said fat phase comprising cocoa butter as a major component and solids and/or water as minor components and said solid phase comprising cocoa powder and water; and e) subjecting a mixture comprising a natural or artificial sweetener to pasteurization, homogenisation and freezing to obtain the cocoa-flavored frozen dessert; wherein the non-dried solid phase obtained in step d) and having a water content of 50 % by weight or more based on the total weight of the solid phase is added to the mixture before or during step e), and wherein the cocoa-flavored frozen dessert obtained in step e) comprises at least 2 wt.-% of cocoa powder as introduced by the non-dried solid phase, based on the total solid content of the cocoa-flavored frozen dessert.

In another embodiment, the present invention relates to the use of a non-dried solid phase for the manufacture of a cocoa-flavored frozen dessert, the non-dried solid phase being obtainable by: a) adding water to cocoa beans or nibs to form a suspension; b) wet grinding said suspension; c) subjecting said suspension to a heat treatment at a temperature of 70°C or less; and d) separating the suspension into a water phase (heavy phase), a fat phase (light phase) comprising cocoa butter as a major component and solids and/or water as minor components, and the non-dried solid phase comprising cocoa powder and water, wherein the use of the non-dried solid phase comprises: e) subjecting a mixture comprising a natural or artificial sweetener to pasteurization, homogenisation and freezing to obtain the cocoa-flavored frozen dessert; wherein the non-dried solid phase obtained in step d) and having a water content of 50 % by weight or more based on the total weight of the solid phase is added to the mixture before or during step e), and wherein the cocoa-flavored frozen dessert obtained in step e) comprises at least 2 wt.-% of cocoa powder as introduced by the non-dried solid phase, based on the total solid content of the cocoa-flavored frozen dessert.

A further aspect of the present invention is a cocoa-flavored frozen dessert obtained by the aforementioned methods.

### BRIEF DESCRIPTION OF THE DRAWINGS

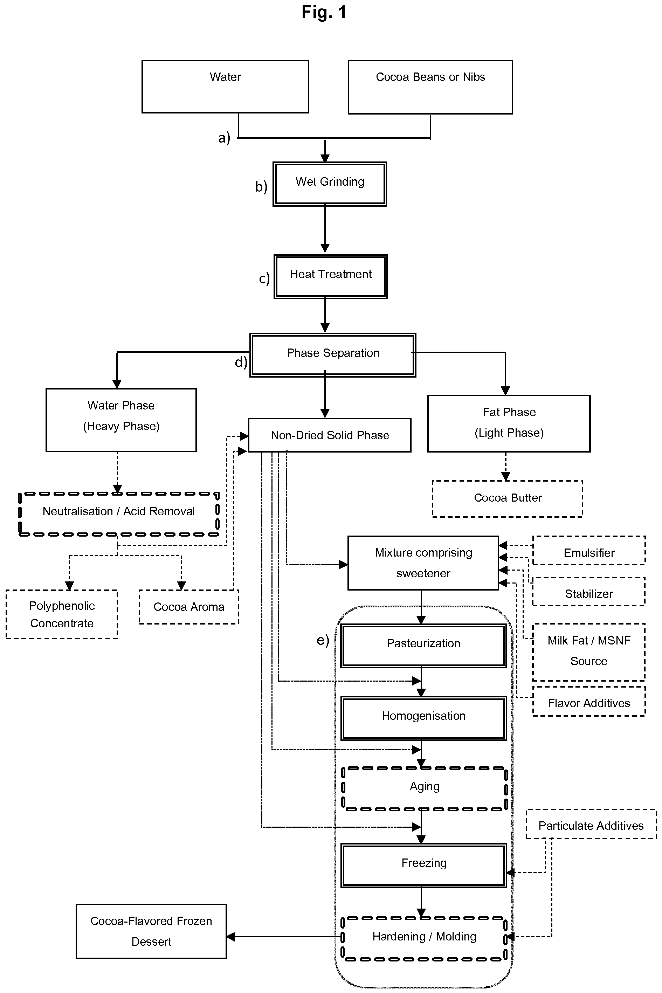

FIG. 1 illustrates an exemplary method for processing the cocoa beans up to the provision of cocoa-flavored frozen desserts according to to the first embodiment of the present invention.

### DETAILED DESCRIPTION OF THE INVENTION

For a more complete understanding of the present invention, reference is now made to the following description of the illustrative embodiments thereof:

### Methods of Manufacturing Cocoa-Flavored Frozen Dessert,

The method for manufacturing a cocoa-flavored frozen dessert according to a first embodiment of the present invention is generally characterized by the steps of: a) adding water to cocoa beans or nibs to form a suspension; b) wet grinding said suspension; c) subjecting said suspension to a heat treatment at a temperature of 70°C or less; d) separating the suspension into a water phase (heavy phase), a fat phase (light phase) and a solid phase, said fat phase comprising cocoa butter as a major component and solids and/or water as minor components and said solid phase comprising cocoa powder and water; and e) subjecting a mixture comprising a natural or artificial sweetener to pasteurization, homogenisation and freezing to obtain the cocoa-flavored frozen dessert; wherein the non-dried solid phase obtained in step d) and having a water content of 50 % by weight or more based on the total weight of the solid phase is added to the mixture before or during step e), and wherein the cocoa-flavored frozen dessert obtained in step e) comprises at least 2 wt.-% of cocoa powder as introduced by the non-dried solid phase, based on the total solid content of the cocoa-flavored frozen dessert.

A schematic representation of an exemplary process according to the first embodiment is provided by FIG. 1, wherein the dashed lines denote optional additives (thin) and processing steps (thick) and wherein the continuous lines denote essential features.

In general, the term "cocoa-flavored frozen dessert", as used herein, is not limited to chocolate-flavored ice cream, but is understood to encompass all frozen desserts which make use of the flavors present or developed in the cocoa bean, including hard frozen ice cream products, low- and non-fat ice cream products, light and reduced ice cream products, soft-frozen ice cream products, frozen yoghurts, sherbets and sorbets. Frozen desserts can be firm, solid products, or can be pumpable, semi-solid products (e.g., in the form of soft serve-type products).

The above-described manufacturing method generally begins with forming a suspension of cocoa beans or nibs by adding water, either prior or during the grinding of the cocoa beans/nibs in step b). The pre-treatment of the cocoa beans or nibs used for step a) is not particular limited. For instance, the cocoa beans used may be fermented or unfermented beans (which have been optionally subjected to an incubation, e.g. according to WO 2014/130539 A1 or EP 3 114 939 B1) and roasted or non-roasted beans. In embodiments, fresh green beans with or without pulp and mucilage from the cocoa fruit may be used. Also, whole beans or beans which have been subjected to a "breaking" step during which the beans are broken into smaller, non-whole bean particles (e.g., cocoa nibs) may be employed.

The cocoa bean/nib suspension is formed by addition of water. While not being limited thereto, the weight ratio of water to cocoa beans/nibs in the formed suspension is preferably between 1:1 to 6:1, more preferably 2:1 to 4:1, especially preferably about 3:1, which may advantageously affect the processability in the further steps (e.g. facilitated pumping, grinding and easier phase separation).

If desirable from the viewpoint of introducing additional flavors and in dependence of the desired dessert (e.g., ice cream, frozen yoghurt, sorbet or sherbet), alternative water-containing liquids may also be used as a source of water, preferably liquids selected from one or more of coffee, tea and liquids having water contents of from 60 to about 95 % by weight, such as fruit juices, fruit juice concentrates, or milk, for example. In such a case, it is preferable that the water content in the formed suspension falls into the above-defined ratios. Since the thermal load in the further method steps is relatively low, temperature-sensitive flavors originating from said liquids are retained and may favorably interact with the primary and secondary flavors of the cocoa bean.

In order to add coffee flavors to the frozen dessert, coffee beans (whole or broken, unroasted or roasted) may be mixed to the cocoa beans/nibs when forming the suspension in water, provided that the cocoa beans/nibs form the major part in the bean mixture so that the content of coffee beans does not interfere or negatively affect the wet milling and phase separation steps. Preferably, the coffee bean content is less than 20% by weight of the bean mixture, more preferably less than 10% by weight.

The cocoa beans/nibs are subjected to a single or multiple wet grinding step(s), which result in bean particle sizes of preferably 50 µm or smaller, more preferably 40 µm or smaller, even more preferably 20 µm or smaller. Reducing the bean particles to such a size range substantially increases the exposed surface area of the bean particle material therefore allowing it to be more efficiently wet (e.g., with water rather than a chemical solvent) for improved extraction results (such as improved extraction of fats or lipids, aromatic substances, and/or polyphenols). The bean particle size reduction may be accomplished by using disc mills (e.g. perforated disc mill), colloid mills (e.g. toothed colloid mills), or corundum stone mills, for example. It is preferable that in at least one grinding step, cocoa bean cells are macerated to enable the solvent (water) to wet the cocoa bean material better due to increased available surface area of the macerated cocoa beans. The methods and devices used for wet milling are not particularly limited as long as undesirable emulsification by significant frictional heat production or high mechanical forces is avoided. For example, when using multiple grinding steps, a coarse wet grinding step (e.g., optionally with further water) may be carried out using a perforated disc mill, and the coarsely milled suspension may be pumped to a toothed colloid mill for a fine grinding step.

After the wet grinding step, the suspension is subjected to a thermal treatment at a temperature of no more than approximately 70°C in order to reduce the overall thermal load and prevent emulsification. From the viewpoint of a favorable balance of cocoa butter yield and preservation of desirable flavors, such as aromatics, anti-oxidants and/or vitamins, heating temperatures of from 43 to 65°C are preferable. In terms of cocoa butter liquefaction and/or improved mechanical phase separation, a heating temperature range of from 45 to 50°C is particularly preferable. Without being limited thereto, heating of the wet-milled suspension may be carried out by a scrap or tube heat exchanger.

In step d), phase separation is carried out so that three phases, i.e. a water phase (heavy phase), a fat phase (light phase) and a solid phase are obtained, said fat phase comprising cocoa butter as a major component and solids and/or water as minor components and said solid phase comprising cocoa powder and water. Preferably, devices employing centrifugal forces may be utilized to achieve mechanical particle separations, such as decanters or nozzle separators. For instance, the suspension may be decanted to separate coarse or large or high mass solids from liquid(s) and then smaller and/or fine solid particles may be further separated from liquids and/or oil products may be separated from non-oil products. In addition to cocoa powder and water, the wet solid phase may comprise residual cocoa butter. Upon the initial separation into the three phases, the cocoa butter content is typically 30% by weight or less, more preferably less than 25% by weight, further preferably less than 20% by weight, especially preferably less than 17% by weight relative to the total dry weight of the solid phase. Depending on the desired total fat content in the final frozen dessert, one or more additional purification or phase separation steps may be employed to reduce the fat content in the product and to improve the yield of cocoa butter.

Also, multiple phase separation and recombination steps may be employed to achieve an improved separation between the water phase (heavy phase), the fat phase (light phase) and the solid phase. For example, the fat phase obtained by an initial decanting step may be further filtered or centrifuged to separate remaining fine particles or water from the fat phase and the thus obtained fine particles and water may be recombined with the water and solid phases from the initial decanting step or at a later processing stage of said phases. Also, the water phase may be subjected to further purification steps, e.g. by filtration using vacuum rotation filters in order to remove fine particles and reduce cloudiness of the liquid.

Optionally, after separation of the three phases (i.e. the water phase (heavy phase), the fat phase (light phase) and the wet solid phase), cocoa butter may be separated from the fat phase), and cocoa aroma and/or a polyphenolic concentrate may be separated from the water phase, as is illustrated by Fig. 1. The fat phase (light phase) may be filtered (e.g. by employing a vibrating screen) and/or conveyed to a 3-phase separator (e.g. centrifuge) to remove fine particles (which may be optionally added to the wet solid phase) and residue water (which may be optionally added to the water phase prior to aroma recovery). By filtering the purified fat phase, cocoa butter may be obtained.

According to the present invention, the solid phase obtained in step d) and added to the mixture comprising a natural or artificial sweetener before or during step e) is not actively dried after the three-phase separation step and before addition to the mixture, which remarkably reduces the processing costs and energy expenditure, and retains high contents of antioxidants, especially when compared to known methods which essentially incorporate a drying/roasting step to enable further processing and to attenuate bitter flavors and/or astringent mouthfeel, or compared to methods employing a conching step to redistribute into the fat phase the substances from the dry cocoa, while removing unwanted acetic, propionic, and butyric acids from the chocolate, reducing moisture, and mellowing the flavor of the product (using conching temperatures of from around 49 °C for milk chocolate to up to 82 °C for dark chocolate). In preferred embodiments, the wet solid phase is not subjected to temperatures of 40°C or more, further preferably 30°C or more, especially preferably 27°C or more, before addition to the mixture comprising a natural or artificial sweetener.

The wet, non-dried solid phase has a water content of 50% by weight or more based on the total weight of the solid phase.

While it is preferred to add the wet solid phase obtained in step d) directly to the mixture comprising sweetener, the wet solid phase may also be packaged for storage and/or transport (e.g. from a cocoa bean processing facility to an ice cream manufacturing facility) before being subjected to step e). In this case, the wet solid phase can be deodorized employing a vacuum de-aerator if there is microorganism spoilage of cocoa extracted materials, or, if microorganism contamination occurs, a high pressure treatment such as pascalisation is may be employed (e.g., which is desirable because it can preserve aromatic compounds). However, if both microorganism spoilage and contamination are expected, heat treatment and deodorization may be employed. In this respect, it is preferred to store and/or transport the wet solid phase in a frozen or at least cooled state (e.g. at temperatures of 4 °C or less).

In a preferred embodiment, the water phase obtained in step d) is separately processed and at least one part of the processed water phase is added to the mixture before or during step e).

More preferably, separately processing the water phase comprises a purification step and/or a neutralization step effecting the removal of acidic components (such as acetic acid or citric acid, for example) originating from the cocoa beans or nibs. The method of removing acidic components via the water phase is not particularly limited and may be carried out by any suitable method known in the art. For example, acids may be removed from the water phase by e.g. distillation (e.g. extractive distillation or reactive distillation), extraction (e.g. liquid-liquid) extraction, emulsion-type liquid membrane processes, salting out or combinations thereof. It has further been found that the water phase obtained in the decanting step also contains desired flavors, which may be recovered by subjecting the water phase to a concentration step to obtain a hydrophilic aroma extract. Additionally, enhancement of cocoa flavors may be achieved using reverse flow distillation (i.e., to separate flavor compounds and water). Recombination of the thus processed water phase with the solid phase enables recovery of hydrophilic aromas and polyphenols in the final product, while reducing unpleasant aromas (stinging, bitter and overly sour flavors) originating from the acidic components.

In a preferred embodiment, the at least one part of the processed water phase is added to the mixture so as to adjust the total water content in the mixture to a range of between 52 and 80 % by weight based on the total weight of the mixture, preferably to a range of between 54 and 72 % by weight.

The natural or artificial sweetener comprised in the mixture of step e) is not particularly limited, but is preferably selected from one or more of cocoa pulp, sucrose, fructose, glucose syrup, invert sugar, fruit sugar, corn syrup, sucralose, acesulfame potassium, aspartame, saccharin, cyclamates, acesulfame-K, thaumatin, chalcone, cyclamate, stevioside, stevia, sorbitol, xylitol and lactitol. In conventional methods, the amount of sweetener must be increased in order to compensate for the bitter flavor of cocoa, typically by 80 to 120 pts. by weight of sucrose (or equivalent) per 100 pt. by weight of cocoa solids. One advantage of the present invention is that a large amount of components inducing bitter flavors in the final product (e.g. acids, etc.) is removed via the water phase, so that lower amounts of sweeteners are required to balance the bitter cocoa flavors.

Depending on the kind of cocoa-flavored frozen dessert and desired organoleptic properties, the mixture subjected to step e) may include further ingredients.

In preferred embodiments, the mixture comprising a natural or artificial sweetener further comprises fruit juice, one or more milk products (such as, whole, defatted or partly defatted milk, whey, buttermilk, condensed milk, fermented milk products (e.g. kefir, kumis), or milk serum, for example) and/or an egg product. While not being limited thereto, the one or more milk products preferably comprise milk fat, milk solids non-fat (MSNF) and/or yoghurt, whereas the egg product is preferably egg yolk. Milk solids non-fat (MSNF) typically comprises lactose, casein, whey proteins, minerals, vitamins and other components of milk or milk products (e.g., condensed milk, skim milk powder, whey protein concentrate ingredients).

In another preferred embodiment, the mixture further comprises an emulsifier, which may improve the texture and shape retention of the frozen dessert and enhance its ability to incorporate air. The emulsifier is not particularly limited as long as it facilitates the mixing of fat and water. As examples of preferred emulsifiers, locust bean gum, guar gum, carboxymethyl cellulose, xanthan gum, sodium alginate, carrageenan, gelatin, (fresh) egg yolk, stabilized egg yolk, enzymatically treated egg yolk, dried egg yolk, salted egg yolk, egg-yolk derived emulsifiers (e.g. lecithin) and combinations thereof may be mentioned.

In another preferred embodiment, the mixture further comprises a stabilizer, which may improve smoothness in body and texture and reduce ice crystal growth during storage and temperature fluctuations. The stabilizer is not particularly limited as long as it is capable of increasing the viscosity of the mix. As examples of preferred stabilizers, monoglycerides, diglycerides, polysorbate 80, and combinations thereof may be mentioned.

Optionally, the mixture may further comprise one or more additional components selected from the group comprising vitamins (including, but not limited to vitamins C, D, and E, for example), flavouring agents (including, but not limited to vanillin, coumarin, cinnamon, clove, liqueur flavorings (e.g., rum, whiskey, fruit liqueurs and the like) and colouring agents known in the art.

If the desired cocoa-flavored frozen dessert is selected from hard frozen ice cream products, low-fat ice cream products, light ice cream products and soft-frozen ice cream products, the mixture to which the non-dried solid phase obtained in step d) is added preferably comprises: 0.5 to 50% by weight of milk fat, 3 to 38% by weight of milk solids-not-fat (MSNF), less than 60% by weight of one or more sweeteners,0.01 to 3% by weight of a stabilizer, and 0.01 to 3% by weight of an emulsifier, each content range being based on the total solid weight in the mixture.

If the cocoa-flavored frozen dessert is selected from a sherbet or sorbet, the mixture to which the non-dried solid phase obtained in step d) is added preferably comprises: less than 8% by weight of milk fat, less than 12% by weight of milk solids-not-fat (MSNF), less than 65% by weight of one or more sweeteners, 0.01 to 3% by weight of a stabilizer, and 0.01 to 3% by weight of an emulsifier, each content range being based on the total solid weight in the mixture.

In cocoa-flavored frozen yoghurts, the mixture to which the non-dried solid phase obtained in step d) is added preferably comprises: less than 18% by weight of milk fat, 5 to 45% by weight of milk solids-not-fat (MSNF), less than 60% by weight of one or more sweeteners, 0.01 to 3% by weight of a stabilizer, and 0.01 to 3% by weight of an emulsifier, each content range being based on the total solid weight in the mixture.

It is understood that the above-described additives need not be present in the mixture at the time of the addition of the wet solid phase, but may be also added at any time during or after the pasteurization and homogenisation in step e), which will be described in the following in further detail.

Step e) generally starts with a blend of ingredients, including the wet solid phase obtained in step d). Liquid ingredients may be blended manually or in an automated manner by use of pumps or tanks on load cells, while solid materials may be added thorugh a pumping system under high velocity or through liquefiers, for example.

Once the components have been blended, the mixture may be pasteurized to destruct pathogenic bacteria, if present. For this purpose, the mixture is typically heated to a temperature of between 69 and 90° for a time period between 30 minutes to 20 seconds (depending on the legal requirements) to sufficiently reduce the total bacterial load while preferably avoiding significant denaturation of proteins. The pasteurization process may be carried out in batch or continuous operation, e.g. by the use of HTST (high temperature short time) heat exchangers.

Homogenisation of ice cream mix prior to freezing reduces the dimension of the fat droplets, increasing the perception of creaminess and the product stability by decreasing the rate of fat agglomeration. Homogenisation may be brought about by methods known in the art, and typically includes forcing the heated pasteurized mass through an orifice under high pressure, typically between 120 and 2100 bar. Ultra high pressure (UHP) homogenisation with pressures of between 1400 and 2100 bar is preferable as it enables the provision of emulsions with a large number of very small fat droplets (diameters of less than 0.5 µm) and requires lower fat content to achieve the sensory and stability properties compared a product homogenized at lower pressures.

The homogenized mixture may be then optionally aged by storing at a temperature of about 0°C to about 15°C, preferably between 1 and 10°C, for about 1 hour to about 24 hours, such as between 1 to 6°C for a period of 1 to 5 hours. In a preferred embodiment, aging of the homogenized mixture is performed at 1 to 4 °C for a period of 2 to 24 hours. The aging step promotes hydration of milk proteins and stabilizers, crystallization of the fat globules and may result in a smoother texture of the final product.

After homogenisation, the optionally aged mixture is preferably subjected to a freezing step. The freezing process is not particularly limited and may be brought about by methods known in the art and may consist of a single step or of multiple subsequent steps. For example, the mixture may be frozen using a batch or continuous freezer known as swept-surface heat exchanger (SSHE) where it can be aerated by incorporating sufficient air to give a desired overrun, for example an overrun of at least 10%. The air may be incorporated into the aged mix prior to the SSHE, using a device such as a mechanical pre-aerator, or may be directly introduced into the SSHE. The particular amount of overrun is not particularly limited and can be any level appropriate for conventional frozen dessert products. While not being limited thereto, exemplary freezing methods and devices are disclosed in EP 1 202 638 B1 and GB2447602A for example.

In a preferred embodiment with respect to improved smoothness and creaminess of the final product, low temperature extrusion (LTE) is employed in the freezing process, wherein the frozen product is preferably shear treated in the low temperature range of about -5 °C to -25°C, e.g. at a rotational speed in a single screw or twin screw extruder of between 3 and 60 rpm. Low temperature extrusion may replace a freezing step using a swept-surface heat exchanger (SSHE) or may be used after a pre-freezing step using an SSHE.

In a preferred embodiment, step e) further comprises a hardening step, which may include a step of freezing the mixture in a mold at temperatures of -20°C or lower. In a further preferred embodiment, the surfaces of the mold are preferably cooled to cryogenic temperatures of less than -50°C, further preferably less than -75°C, which enables the provision of complex 3D shapes due to low adhesion of the product to the mold surface when compared to higher cooling temperatures. While not being limited thereto, exemplary methods of cryogenic freezing are disclosed in WO 2010/003739 A2, US 2005/0106301 A1, US 5,948,456 A and US 6,025,003 A.

Flavoring (and optionally coloring) substances can be added to the mixture at any stage deemed appropriate to the skilled artisan. Typically, flavor extracts, essences and concentrates (e.g., vanilla) are added after the homogenized pasteurized mixture has been aged, but prior to freezing. Exemplary flavor concentrates which may be used include, but are not limited to fruit syrups, coffee, liqueur-derived flavors (incl. rum, whiskey, pina colada, amaretto, Irish cream, and the like), caramel syrup, and peppermint syrup, for example. In addition, particulate components may be added to the ice cream to enhance the appearance or taste of the final product. Such ingredients may include, but are not limited to chocolate chips or flakes (e.g. according to EP 0 221 757 A2, for example), fruits (including dried, freeze-dried and/or fresh fruits), (culinary) nuts (including, but not limited to hazelnuts, pecan nuts, macadamia nuts, peanuts, walnuts, almonds, and pistachios, which may be whole, chopped or sliced, for example), acacia fiber gum, candy, cookies, marshmallow, brownies, pastry, and the like or any mixtures thereof. Flavoring substances in the form of whole or comminuted food pieces are typically added after the homogenized and pasteurized mixture has been at least partially frozen. Food particles may also be incorporated in an automated manner during the freezing, in accordance with WO 2005/031226 A1, for example.

In one embodiment, the frozen dessert may comprise multiple components in addition to particulate additives, e.g. cone wafer, one or more sheet wafers, a filling and/or a surface coating. Non-limiting examples thereof are disclosed in US 6,379,724 B1, and EP 0 710 074 A1.

As will be readily apparent to the skilled artisan, the methods described above provide and inexpensive and simple manufacturing route for cocoa-flavored frozen desserts, which exhibit improved yields of valuable anti-oxidants and pleasant aromas compared to conventional methods known in the art.

### Cocoa-Flavored Frozen Dessert

In a second embodiment, the present invention provides a cocoa-flavored frozen dessert produced by the method according to the above-described first embodiment.

In order to make ideal use of the nutritionally beneficial components of the cocoa fruit, the cocoa-flavored frozen dessert obtained in step e) comprises at least 2 wt.-%, preferably at least 3 wt.-%, especially preferably at least 5 wt.-%, such as from 6 to 20 wt.-% of cocoa powder as introduced by the wet solid phase, based on the total solid content of the cocoa-flavored frozen dessert.

Non-limiting examples of preferred dessert formulations are shown in Table 1 below.

**TABLE 1**

| Type | Milk fat | Milk solids-non-fat (MSNF) | Sweetener | Stabilizer and Emulsifier (total) | Cocoa solid from wet solid phase | Total solids |
|---|---|---|---|---|---|---|
| | [wt.-%]* | [wt.-%]* | [wt.-%]* | [wt.-%]* | [wt.-%]* | [wt.-%]* |
| Non-fat ice cream | < 0.5 | 12-14 | 0.05-25 | 0.5-1.5 | 2-20 | 25-40 |
| Low-fat ice cream | 2-5 | 12-14 | 0.05-22 | 0.3-1.2 | 2-20 | 25-40 |
| Light ice cream | 5-7 | 11-12 | 0.05-21 | 0.2-0.8 | 2-20 | 26-42 |
| Reduced-fat ice cream | 7-9 | 10-12 | 0.05-20 | 0.1-0.6 | 2-20 | 28-44 |
| Economy ice cream | 10 | 10-11 | 0.05-18 | 0.1-0.6 | 2-20 | 30-44 |
| Standard ice cream | 10-12 | 8-10 | 0.05-18 | 0.1-0.5 | 2-20 | 32-46 |
| Premium ice cream | 12-18 | 5-10 | 0.05-17 | < 0.5 | 2-20 | 34-48 |
| Frozen yoghurt (regular and non-fat) | < 6 | | 0.05-20 | 0.1-1.0 | 2-20 | 25-46 |
| Sherbet or sorbet | < 2 | 0.1-4 | 0.05-30 | 0.2-0.8 | 2-20 | 25-48 |

| | | | | | | |
|---|---|---|---|---|---|---|
| * relative to total dry weight of the frozen dessert excluding particulate flavor additives, fillings and coatings | | | | | | |

The total polyphenol content of the defatted cocoa solid is at least 40 mg of ECE (epicatechin equivalents) per gram of defatted dry mass, preferably more than 50 mg of ECE per g of defatted dry mass, further preferably more than 55 mg of ECE per g of defatted dry mass. The total polyphenol content may be determined by using a Folin-Ciocalteu assay with (-)-epicatechin as standard, in accordance with the method disclosed in Folin-Ciocalteu index, Off. J. Eur. Communities 1990, 41, 178-179, and Cooper et al., J. Agric. Food Chem 2008, 56, 260-265.

It will be understood that the preferred features of the first embodiment may be freely combined with the second embodiment in any combination, except for combinations where at least some of the features are mutually exclusive.

### Use of a non-dried solid phase for the manufacture of a cocoa-flavored frozen dessert

In a third embodiment, the present invention relates to the use of a non-dried solid phase for the manufacture of a cocoa-flavored frozen dessert, the non-dried solid phase being obtainable by: a) adding water to cocoa beans or nibs to form a suspension; b) wet grinding said suspension; c) subjecting said suspension to a heat treatment at a temperature of 70°C or less; and d) separating the suspension into a water phase (heavy phase), a fat phase (light phase) comprising cocoa butter as a major component and solids and/or water as minor components, and the non-dried solid phase comprising cocoa powder and water, wherein the use of the non-dried solid phase comprises: e) subjecting a mixture comprising a natural or artificial sweetener to pasteurization, homogenisation and freezing to obtain the cocoa-flavored frozen dessert; wherein the non-dried solid phase obtained in step d) and having a water content of 50 % by weight or more based on the total weight of the solid phase is added to the mixture before or during step e), and wherein the cocoa-flavored frozen dessert obtained in step e) comprises at least 2 wt.-% of cocoa powder as introduced by the non-dried solid phase, based on the total solid content of the cocoa-flavored frozen dessert.

The preferred features of the first and second embodiments may be freely combined with the third embodiment in any combination, except for combinations where at least some of the features are mutually exclusive.

Before use, the non-dried solid phase may be present in a frozen or cooled state, as mentioned above in conjunction with the first embodiment. If necessary, the cooled, non-dried solid phase may be defrosted or gently heated to room temperature before being subjected to the frozen dessert manufacturing process.

Once given the above disclosure, many other features, modifications, and improvements will become apparent to the skilled artisan.

## Claims

1. Method of manufacturing a cocoa-flavored frozen dessert, comprising the steps of:
a) adding water to cocoa beans or nibs to form a suspension;
b) wet grinding said suspension;
c) subjecting said suspension to a heat treatment at a temperature of 70°C or less;
d) separating the suspension into a water phase (heavy phase), a fat phase (light phase) and a solid phase, said fat phase comprising cocoa butter as a major component and solids and/or water as minor components and said solid phase comprising cocoa powder and water; and
e) subjecting a mixture comprising a natural or artificial sweetener to pasteurization, homogenisation and freezing to obtain the cocoa-flavored frozen dessert;
wherein the non-dried solid phase obtained in step d) and having a water content of 50 % by weight or more based on the total weight of the solid phase is added to the mixture before or during step e), and
wherein the cocoa-flavored frozen dessert obtained in step e) comprises at least 2 wt.-% of cocoa powder as introduced by the non-dried solid phase, based on the total solid content of the cocoa-flavored frozen dessert.

2. The method according to claim 1, wherein the water phase obtained in step d) is separately processed and at least one part of the processed water phase is added to the mixture before or during step e).

3. The method according to claim 2, wherein separately processing the water phase comprises a purification step and/or a neutralization step effecting the removal of acidic components originating from the cocoa beans or nibs.

4. The method according to any of claims 2 and 3, wherein the at least one part of the processed water phase is added to the mixture so as to adjust the water content in the mixture to a range of between 52 and 80 % by weight based on the total weight of the mixture, preferably to a range of between 54 and 72 % by weight.

5. The method according to any of claims 1 to 4, wherein the mixture comprising a natural or artificial sweetener further comprises fruit juice, one or more milk products and/or an egg product, wherein the one or more milk products preferably comprise milk fat, milk solids non-fat (MSNF) and/or yoghurt, and wherein the egg product is preferably egg yolk.

6. The method according to any of claims 1 to 5, wherein the mixture further comprises an emulsifier and/or a stabilizer; the emulsifier being preferably selected from one or more of locust bean gum, guar gum, carboxymethyl cellulose, xanthan gum, sodium alginate, carrageenan and gelatin; and the stabilizer being preferably selected from one or more of monoglycerides, diglycerides and polysorbate 80.

7. The method according to any of claims 1 to 6, wherein the natural or artificial sweetener is selected from one or more of cocoa pulp, sucrose, fructose, glucose syrup, invert sugar, fruit sugar, corn syrup, sucralose, acesulfame potassium, aspartame, saccharin, cyclamates, acesulfame-K, thaumatin, chalcone, cyclamate, stevioside, stevia, sorbitol, xylitol and lactitol.

8. The method according to any of claims 1 to 7, wherein step e) further comprises a step of aging of the homogenized mixture at 1 to 4 °C for a period of 2 to 24 hours before freezing.

9. The method according to any of claims 1 to 8, wherein in step e), the mixture is frozen in a mold, and wherein the surfaces of the mold are preferably cooled to cryogenic temperatures of less than -75°C.

10. The method according to claim 1, wherein the cocoa-flavored frozen dessert is selected from hard frozen ice cream products, low-fat ice cream products, light ice cream products and soft-frozen ice cream products; and wherein the mixture to which the non-dried solid phase obtained in step d) is added comprises:
- 0.5 to 50% by weight of milk fat,
- 3 to 38% by weight of milk solids-not-fat (MSNF),
- less than 60% by weight of one or more sweeteners,
- 0.01 to 3% by weight of a stabilizer, and
- 0.01 to 3% by weight of an emulsifier,
each content range being based on the total solid weight in the mixture.

11. The method according to claim 1, wherein the cocoa-flavored frozen dessert is selected from a sherbet or sorbet; and wherein the mixture to which the non-dried solid phase obtained in step d) is added comprises:
- less than 8% by weight of milk fat,
- less than 12% by weight of milk solids-not-fat (MSNF),
- less than 65% by weight of one or more sweeteners,
- 0.01 to 3% by weight of a stabilizer, and
- 0.01 to 3% by weight of an emulsifier,
each content range being based on the total solid weight in the mixture.

12. The method according to claim 1, wherein the cocoa-flavored frozen dessert is a cocoa-flavored frozen yoghurt; and wherein the mixture to which the non-dried solid phase obtained in step d) is added comprises:
- less than 18% by weight of milk fat,
- 5 to 45% by weight of milk solids-not-fat (MSNF),
- less than 60% by weight of one or more sweeteners,
- 0.01 to 3% by weight of a stabilizer, and
- 0.01 to 3% by weight of an emulsifier,
each content range being based on the total solid weight in the mixture.

13. Cocoa-flavored frozen dessert produced by the method according to any of claims 1 to 12.

14. Use of a non-dried solid phase for the manufacture of a cocoa-flavored frozen dessert, the non-dried solid phase being obtainable by:
a) adding water to cocoa beans or nibs to form a suspension;
b) wet grinding said suspension;
c) subjecting said suspension to a heat treatment at a temperature of 70°C or less; and
d) separating the suspension into a water phase (heavy phase), a fat phase (light phase) comprising cocoa butter as a major component and solids and/or water as minor components, and the non-dried solid phase comprising cocoa powder and water;
wherein the use of the non-dried solid phase comprises:
e) subjecting a mixture comprising a natural or artificial sweetener to pasteurization, homogenisation and freezing to obtain the cocoa-flavored frozen dessert;
wherein the non-dried solid phase obtained in step d) and having a water content of 50 % by weight or more based on the total weight of the solid phase is added to the mixture before or during step e), and
wherein the cocoa-flavored frozen dessert obtained in step e) comprises at least 2 wt.-% of cocoa powder as introduced by the non-dried solid phase, based on the total solid content of the cocoa-flavored frozen dessert.

## Patentansprüche

1. Verfahren zur Herstellung eines gefrorenen Desserts mit Kakaogeschmack, das die folgenden Schritte umfasst:
a) Zugeben von Wasser zu Kakaobohnen oder Kakaonibs, um eine Suspension zu bilden;
b) Nassvermahlen der Suspension;
c) Wärmebehandeln der Suspension bei einer Temperatur von 70°C oder weniger;
d) Trennen der Suspension in eine Wasserphase (schwere Phase), eine Fettphase (leichte Phase) und eine feste Phase, wobei die Fettphase Kakaobutter als Hauptbestandteil und Feststoffe und/oder Wasser als Nebenbestandteile enthält und die feste Phase Kakaopulver und Wasser enthält; und
e) Pasteurisieren, Homogenisieren und Gefrieren einer Mischung, die ein natürliches oder künstliches Süßungsmittel enthält, um das gefrorene Dessert mit Kakaogeschmack zu erhalten;
wobei der Mischung die in Schritt d) erhaltene ungetrocknete feste Phase mit einem Wassergehalt von 50 Gew.-% oder mehr, bezogen auf das Gesamtgewicht der festen Phase, vor oder während Schritt e) zugesetzt wird, und
wobei das in Schritt e) erhaltene gefrorene Dessert mit Kakaogeschmack mindestens 2 Gew.-% durch die ungetrocknete feste Phase eingebrachtes Kakaopulver enthält, bezogen auf den Gesamtfeststoffgehalt des gefrorenen Desserts mit Kakaogeschmack.

2. Verfahren nach Anspruch 1, wobei die in Schritt d) erhaltene Wasserphase separat aufbereitet wird und mindestens ein Teil der aufbereiteten Wasserphase der Mischung vor oder während Schritt e) zugesetzt wird.

3. Verfahren nach Anspruch 2, **dadurch gekennzeichnet, dass** die separate Aufbereitung der Wasserphase einen Reinigungsschritt und/oder einen Neutralisierungsschritt umfasst, der die Entfernung von sauren Bestandteilen aus den Kakaobohnen oder Kakaonibs bewirkt.

4. Verfahren nach einem der Ansprüche 2 und 3, wobei der mindestens eine Teil der aufbereiteten Wasserphase der Mischung zugesetzt wird, um den Wassergehalt in der Mischung auf einen Bereich zwischen 52 und 80 Gew.-% bezogen auf das Gesamtgewicht der Mischung, vorzugsweise auf einen Bereich zwischen 54 und 72 Gew.-%, einzustellen.

5. Verfahren nach einem der Ansprüche 1 bis 4, wobei die Mischung, die einen natürlichen oder künstlichen Süßstoff enthält, ferner Fruchtsaft, ein oder mehrere Milchprodukte und/oder ein Eiprodukt umfasst, wobei das eine oder die mehreren Milchprodukte vorzugsweise Milchfett, fettfreie Milchtrockenmasse (MSNF) und/oder Joghurt umfassen, und wobei das Eiprodukt vorzugsweise Eigelb ist.

6. Verfahren nach einem der Ansprüche 1 bis 5, wobei die Mischung ferner einen Emulgator und/oder einen Stabilisator enthält; wobei der Emulgator vorzugsweise aus einem oder mehreren von Johannisbrotkernmehl, Guarkernmehl, Carboxymethylcellulose, Xanthangummi, Natriumalginat, Carrageen und Gelatine ausgewählt ist; und wobei der Stabilisator vorzugsweise aus einem oder mehreren von Monoglyceriden, Diglyceriden und Polysorbat 80 ausgewählt ist.

7. Verfahren nach einem der Ansprüche 1 bis 6, wobei der natürliche oder künstliche Süßstoff aus einem oder mehreren der folgenden Stoffe ausgewählt ist: Kakaopulpe, Saccharose, Fruktose, Glukosesirup, Invertzucker, Fruchtzucker, Maissirup, Sucralose, Acesulfam-Kalium, Aspartam, Saccharin, Cyclamaten, Acesulfam-K, Thaumatin, Chalkon, Cyclamat, Steviosid, Stevia, Sorbit, Xylit und Lactit.

8. Verfahren nach einem der Ansprüche 1 bis 7, wobei Schritt e) ferner einen Schritt der Alterung der homogenisierten Mischung bei 1 bis 4 °C für einen Zeitraum von 2 bis 24 Stunden vor dem Einfrieren umfasst.

9. Verfahren nach einem der Ansprüche 1 bis 8, wobei in Schritt e) die Mischung in einer Form gefroren wird und wobei die Oberflächen der Form vorzugsweise auf kryogene Temperaturen von weniger als -75°C abgekühlt werden.

10. Verfahren nach Anspruch 1, wobei das gefrorene Dessert mit Kakaogeschmack ausgewählt ist aus harten gefrorenen Speiseeiserzeugnissen, fettarmen Speiseeiserzeugnissen, kalorienreduzierten Speiseeiserzeugnissen und weichgefrorenen Speiseeiserzeugnissen; und wobei die Mischung, zu der die in Schritt d) erhaltene ungetrocknete feste Phase zugegeben wird, folgende Bestandteile umfasst:
- 0,5 bis 50 Gew.-% Milchfett,
- 3 bis 38 Gew.-% fettfreie Milchtrockenmasse (MSNF),
- weniger als 60 Gew.-% eines oder mehrerer Süßungsmittel,
- 0,01 bis 3 Gew.-% eines Stabilisators und
- 0,01 bis 3 Gew.-% eines Emulgators,
wobei sich die einzelnen Gehaltsbereiche auf das Gesamtgewicht des Feststoffs in der Mischung beziehen.

11. Verfahren nach Anspruch 1, wobei das gefrorene Dessert mit Kakaogeschmack aus einem Sorbet oder einer Brause ausgewählt ist; und wobei die Mischung, zu der die in Schritt d) erhaltene ungetrocknete feste Phase zugegeben wird, folgende Bestandteile umfasst:
- weniger als 8 Gew.-% Milchfett,
- weniger als 12 Gew.-% fettfreie Milchtrockenmasse (MSNF),
- weniger als 65 Gew.-% eines oder mehrerer Süßungsmittel,
- 0,01 bis 3 Gew.-% eines Stabilisators und
- 0,01 bis 3 Gew.-% eines Emulgators,
wobei sich die einzelnen Gehaltsbereiche auf das Gesamtgewicht des Feststoffs in der Mischung beziehen.

12. Verfahren nach Anspruch 1, wobei das gefrorene Dessert mit Kakaogeschmack ein gefrorener Joghurt mit Kakaogeschmack ist; und wobei die Mischung, zu der die in Schritt d) erhaltene ungetrocknete feste Phase zugegeben wird, folgende Bestandteile umfasst:
- weniger als 18 Gewichtsprozent Milchfett,
- 5 bis 45 Gewichtsprozent fettfreie Milchtrockenmasse (MSNF),
- weniger als 60 Gewichtsprozent eines oder mehrerer Süßungsmittel,
- 0,01 bis 3 Gew.-% eines Stabilisators und
- 0,01 bis 3 Gew.-% eines Emulgators,
wobei sich die einzelnen Gehaltsbereiche auf das Gesamtgewicht des Feststoffs in der Mischung beziehen.

13. Gefrorenes Dessert mit Kakaogeschmack, hergestellt nach dem Verfahren gemäß einem der Ansprüche 1 bis 12.

14. Verwendung einer ungetrockneten festen Phase für die Herstellung eines gefrorenen Desserts mit Kakaogeschmack, wobei die ungetrocknete feste Phase erhältlich ist durch:
a) Zugeben von Wasser zu Kakaobohnen oder Kakaonibs, um eine Suspension zu bilden;
b) Nassvermahlen der Suspension;
c) Wärmebehandeln der Suspension bei einer Temperatur von 70°C oder weniger;
d) Trennen der Suspension in eine Wasserphase (schwere Phase), eine Fettphase (leichte Phase) und eine feste Phase, wobei die Fettphase Kakaobutter als Hauptbestandteil und Feststoffe und/oder Wasser als Nebenbestandteile enthält und die ungetrocknete feste Phase Kakaopulver und Wasser enthält;
wobei die Verwendung der ungetrockneten festen Phase umfasst:
e) Pasteurisieren, Homogenisieren und Gefrieren einer Mischung, die ein natürliches oder künstliches Süßungsmittel enthält, um das gefrorene Dessert mit Kakaogeschmack zu erhalten;
wobei der Mischung die in Schritt d) erhaltene ungetrocknete feste Phase mit einem Wassergehalt von 50 Gew.-% oder mehr, bezogen auf das Gesamtgewicht der festen Phase, vor oder während Schritt e) zugesetzt wird, und
wobei das in Schritt e) erhaltene gefrorene Dessert mit Kakaogeschmack mindestens 2 Gew.-% durch die ungetrocknete feste Phase eingebrachtes Kakaopulver enthält, bezogen auf den Gesamtfeststoffgehalt des gefrorenen Desserts mit Kakaogeschmack.

## Revendications

1. Procédé de fabrication d'un dessert congelé aromatisé au cacao, comprenant les étapes consistant à :
a) ajouter de l'eau aux fèves ou aux éclats de fèves de cacao pour former une suspension ;
b) broyer à l'état humide ladite suspension ;
c) soumettre ladite suspension à un traitement thermique à une température de 70°C ou moins ;
d) séparer la suspension en une phase aqueuse (phase lourde), une phase grasse (phase légère) et une phase solide, ladite phase grasse comprenant du beurre de cacao comme constituant majeur et des matières solides et/ou de l'eau comme constituants mineurs et ladite phase solide comprenant de la poudre de cacao et de l'eau ; et
e) à soumettre un mélange comprenant un édulcorant naturel ou artificiel à une pasteurisation, homogénéisation et congélation pour obtenir le dessert congelé aromatisé au cacao ;
dans lequel la phase solide non séchée obtenue dans l'étape d) et présentant une teneur en eau de 50 % en poids ou plus sur la base du poids total de la phase solide est ajoutée au mélange avant ou durant l'étape e), et
dans lequel le dessert congelé aromatisé au cacao obtenu dans l'étape e) comprend au moins 2 % en pds de poudre de cacao telle qu'introduite par la phase solide non séchée, sur la base de la teneur totale en matières solides du dessert congelé aromatisé au cacao.

2. Procédé selon la revendication 1, dans lequel la phase aqueuse obtenue dans l'étape d) est séparément traitée et au moins une partie de la phase aqueuse transformée est ajoutée au mélange avant ou durant l'étape e).

3. Procédé selon la revendication 2, dans lequel le traitement séparément de la phase aqueuse comprend une étape de purification et/ou une étape de neutralisation effectuant l'élimination des constituants acides provenant des fèves ou des éclats de fèves de cacao.

4. Procédé selon l'une quelconque des revendications 2 et 3, dans lequel la au moins une partie de la phase aqueuse transformée est ajoutée au mélange afin d'ajuster la teneur en eau dans le mélange à une plage comprise entre 52 et 80 % en poids sur la base du poids total du mélange, préférablement à une plage comprise entre 54 et 72 % en poids.

5. Procédé selon l'une quelconque des revendications 1 à 4, dans lequel le mélange comprenant un édulcorant naturel ou artificiel comprend en outre du jus de fruit, un ou plusieurs produits lactés et/ou un produit à base d'œuf, dans lequel le un ou plusieurs produits lactés comprennent préférablement de la matière grasse d'origine laitière, des matières sèches non grasses laitières (MSNF) et/ou du yaourt, et dans lequel le produit à base d'œuf est préférablement du jaune d'œuf.

6. Procédé selon l'une quelconque des revendications 1 à 5, dans lequel le mélange comprend en outre un agent émulsifiant et/ou un agent stabilisant ; l'agent émulsifiant étant préférablement sélectionné parmi l'un ou plusieurs parmi la gomme de caroube, la gomme de guar, la carboxyméthyl cellulose, la gomme de xanthane, l'alginate de sodium, la carraghénine et la gélatine ; et l'agent stabilisant étant préférablement sélectionné parmi l'un ou plusieurs parmi les monoglycérides, les diglycérides et le polysorbate 80.

7. Procédé selon l'une quelconque des revendications 1 à 6, dans lequel l'édulcorant naturel ou artificiel est sélectionné parmi l'un ou plusieurs parmi la pulpe de cacao, le saccharose, le fructose, le sirop de glucose, le sucre inverti, le sucre de fruit, le sirop de maïs, le sucralose, l'acésulfame potassique, l'aspartame, la saccharine, les cyclamates, l'acésulfame-K, la thaumatine, la chalcone, le cyclamate, le stévioside, le stévia, le sorbitol, le xylitol et le lactitol.

8. Procédé selon l'une quelconque des revendications 1 à 7, dans lequel l'étape e) comprend en outre une étape de maturation du mélange homogénéisé à 1 à 4°C sur une période de 2 à 24 heures avant la congélation.

9. Procédé selon l'une quelconque des revendications 1 à 8, dans lequel dans l'étape e), le mélange est congelé dans un moule, et dans lequel les surfaces du moule sont préférablement refroidies à des températures cryogéniques inférieures à -75°C.

10. Procédé selon la revendication 1, dans lequel le dessert congelé aromatisé au cacao est sélectionné parmi les produits surgelés type crème glacée, les produits type crème glacée à faible teneur en matière grasse, les produits type crème glacée allégée et les produits congelés type crème glacée moelleuse ; et dans lequel le mélange auquel la phase solide non séchée obtenue dans l'étape d) est ajouté comprend :
- de 0,5 à 50 % en poids de matière grasse d'origine laitière,
- de 3 à 38 % en poids de matières sèches non grasses laitières (MSNF),
- moins de 60 % en poids d'un ou plusieurs édulcorants,
- de 0,01 à 3 % en poids d'un agent stabilisant, et
- de 0,01 à 3 % en poids d'un agent émulsifiant, chaque plage de teneurs étant basée sur le poids total en matière solide dans le mélange.

11. Procédé selon la revendication 1, dans lequel le dessert congelé aromatisé au cacao est sélectionné parmi un sherbet ou sorbet ; et dans lequel le mélange auquel la phase solide non séchée obtenue dans l'étape d) est ajoutée comprend :
- moins de 8 % en poids de matière grasse d'origine laitière,
- moins de 12 % en poids de matières sèches non grasses laitières (MSNF),
- moins de 65 % en poids d'un ou plusieurs édulcorants,
- de 0,01 à 3 % en poids d'un agent stabilisant, et
- de 0,01 à 3 % en poids d'un agent émulsifiant, chaque plage de teneurs étant basée sur le poids total en matière solide dans le mélange.

12. Procédé selon la revendication 1, dans lequel le dessert congelé aromatisé au cacao est un yaourt congelé aromatisé au cacao ; et dans lequel le mélange auquel la phase solide non séchée obtenue dans l'étape d) est ajoutée comprend :
- moins de 18 % en poids de matière grasse d'origine laitière,
- de 5 à 45 % en poids de matières sèches non grasses laitières (MSNF),
- moins de 60 % en poids d'un ou plusieurs édulcorants,
- de 0,01 à 3 % en poids d'un agent stabilisant, et
- de 0,01 à 3 % en poids d'un agent émulsifiant, chaque plage de teneurs étant basée sur le poids total en matière solide dans le mélange.

13. Dessert congelé aromatisé au cacao produit selon le procédé selon l'une quelconque des revendications 1 à 12.

14. Utilisation d'une phase solide non séchée pour la fabrication d'un dessert congelé aromatisé au cacao, la phase solide non séchée pouvant être obtenue en :
a) ajoutant de l'eau à des fèves ou à des éclats de fèves de cacao pour former une suspension ;
b) broyant à l'état humide ladite suspension ;
c) soumettant ladite suspension à un traitement thermique à une température de 70°C ou moins ; et
d) séparant la suspension en une phase aqueuse (phase lourde), une phase grasse (phase légère) comprenant du beurre de cacao comme constituant majeur et des matières solides et/ou de l'eau comme constituants mineurs, et la phase solide non séchée comprenant de la poudre de cacao et de l'eau ;
dans laquelle l'utilisation de la phase solide non séchée comprend :
e) la soumission d'un mélange comprenant un édulcorant naturel ou artificiel à une pasteurisation, homogénéisation et congélation pour obtenir le dessert congelé aromatisé au cacao ;
dans laquelle la phase solide non séchée obtenue dans l'étape d) et présentant une teneur en eau de 50 % en poids ou plus sur la base du poids total de la phase solide est ajoutée au mélange avant ou durant l'étape e), et
dans laquelle le dessert congelé aromatisé au cacao obtenu dans l'étape e) comprend au moins 2 % en pds de poudre de cacao telle qu'introduite par la phase solide non séchée, sur la base de la teneur totale en matières solides du dessert congelé aromatisé au cacao.
